# EUROPEAN PATENT APPLICATION

(11) **EP 2 020 516 A1**
(43) Date of publication of application: **04.02.2009**
(21) Application number: 08252591.6
(22) Date of filing: 30.07.2008
(51) Int. Cl.: F16D 23/06, F16H 3/12

(54) **Synchronizer for transmission**

(30) Priority: 31.07.2007 JP 2007198428
(71) Applicant: TOYOTA JIDOSHA KABUSHIKI KAISHA, Aichi-ken, 471-8571 (JP)
(72) Inventor: Hibino, Akira, Aichi-ken 471-8571 (JP); Takeuchi, Hiroaki, Aichi-ken 471-8571 (JP); Takemura, Tadashi, Aichi-ken 471-8571 (JP)
(74) Representative: Albutt, Anthony John

(57) **Abstract**

In a synchronizer for a transmission, a reverse driven gear (102) is provided integrally on an outer periphery of a sleeve (111.). A gap (D1) is provided between a protrusion portion (1121) of a shifting key (112) and a key groove of the sleeve when the shifting key is in a neutral state. An axial dimension of the gap is set according to a specific formula.

## Description

### BACKGROUND OF THE INVENTION

### 1. Field of the Invention

The invention relates to a synchronizer for a vehicle transmission.

### 2. Description of the Related Art

A constant mesh transmission in which the speed stages are changed by a claw clutch is known as a transmission of a vehicle. Such a constant mesh transmission is equipped with a synchronizer that smoothly changes the transmission from a non-transmitting state to a transmitting state. Japanese Patent Application Publication No. 10-47377 (JP-A-10-47377) and Japanese Patent Application Publication No. 2004-52859 (JP-A-2004-52859), for example, describe that a synchronizer for a transmission is equipped with a transmission gear, clutch hub, sleeve, shifting key (index key), synchronizer ring, and the like on a rotation shaft.

Specifically, in the synchronizer, the shifting key is brought into abutment against the synchronizer ring as the sleeve moves from its neutral position to a certain shifting position (transmitting position), and then the synchronizer ring is pressed against the transmission gear. Then, the sleeve and the transmission gear are synchronously rotated by frictional force generated between the synchronizer ring and the transmission gear. Also in the synchronizer, in order to move the shifting key along with the axial movement of the sleeve, the shifting key is provided with a protrusion portion directed outward in a radial direction and the inner periphery of the sleeve is provided with a recess portion (key groove) that is brought into engagement with the protrusion portion.

Incidentally, although a forward stage of a vehicle transmission is provided with the above synchronizer, a backward stage usually is not provided with the synchronizer. This is because the reverse shift operation for shifting the transmission from the forward stage to the backward stage is normally performed when the clutch is released and the vehicle is stopped. In this case, a selection slide type reverse gear system is used in which out of the reverse drive gear mounted on the input shaft, the reverse driven gear mounted on the countershaft (also called "output shaft" in a front-engine front-drive (FF) vehicle), and the reverse idler gear provided therebetween, one (the reverse idler gear, for example) is slid to mesh the all gears together in the transmitting state.

The reverse gear system has the following concerns about sliding the reverse idler gear axially

When meshing the reverse gear system in the transmitting state during the reverse shift operation, the reverse idler gear pushes and tilts the reverse driven gear. The reverse driven gear on the countershaft is usually integrated with the outer periphery side of the sleeve of the above synchronizer (i.e., the sleeve for first-speed and second-speed gears), in which case when the reverse driven gear tilts the sleeve tilts as well. Then, the shifting key is moved axially by an amount equivalent to the axial tilt of the sleeve.

The shifting key is in a neutral state (neutral position) during the reverse shift operation and a predetermined gap is formed between the shifting key and the synchronizer ring (e.g., the synchronizer ring for a second-speed gear). However, if the movement distance of the shifting key is greater than the gap, synchronous pushing occurs in which the shifting key pushes the synchronizer ring.

Expanding the gap between the shifting key in its neutral state and the synchronizer ring is considered as a way of avoiding the synchronous pushing performed by the shifting key. JP-A-10-47377 describes that a predetermined dimension of gap is provided between the shifting key and the synchronizer ring in order to prevent the shifting key from abutting against the synchronizer ring regardless of the axial oscillation during the neutral state of the synchromesh mechanism (synchronizer).

However, expanding the gap between the shifting key and the synchronizer ring increases the range of movement of the shifting key, making it difficult for the shifting key to return to the key groove. In other words, a return failure occurs in which the protrusion portion of the shifting key in its neutral state cannot return to the key groove of the sleeve completely.

In JP-A-2004-52859, for example, the shape of the inclined surface (inclination angle) of the key groove of the sleeve or the shape of the inclined surface (inclination angle) of the protrusion portion of the shifting key is changed in order to avoid such a return failure. In this case, however, a shift load (shift feeling) changes with the above-described change. Specifically, because the shift load is determined based on the state of engagement (state of contact) between the protrusion portion of the shifting key and the key groove of the sleeve, changing the shape of the protrusion portion of the shifting key or the shape of the key groove of the sleeve will result in obtaining a shift load that is different from initially expected (prior to the change).

As described above, in the conventional synchronizer it was difficult to inhibit a change of the shift load while avoiding the occurrence of the synchronous pushing performed by the shifting key during the reverse shift operation and the occurrence of the return failure of the shifting key in its neutral state.

### SUMMARY OF THE INVENTION

The invention provides a synchronizer for a transmission, which is capable of inhibiting a change of the shift load while avoiding the synchronous pushing and return failure.

A synchronizer for a transmission according to one aspect of the invention has: a clutch hub that is disposed on a rotation shaft so as to be unrotatable relative thereto; a sleeve that is disposed on an outer periphery of the clutch hub so as to be relatively unrotatable but axially relatively movable with respect to the clutch hub and is provided with inner peripheral teeth and recess portion (key groove) on an inner periphery of the sleeve; a transmission gear that is disposed adjacent to the clutch hub so as to be rotatable relative to the rotation shaft and is provided with meshing teeth to be meshed with the inner peripheral teeth of the sleeve and an outer peripheral tapered surface tapered toward the clutch hub; a synchronizer ring that is provided so as to be rotatable relative to the clutch hub only within a predetermined range in a circumferential directiony and is provided with an inner peripheral tapered surface facing the outer peripheral tapered surface of the transmission gear; a shifting key that is provided between the clutch hub and the sleeve so as to be relatively unrotatable but axially movable with respect to the clutch hub and is provided with a protrusion portion engagable with the recess portion of the sleeve; and a spring that urges the shifting key toward the sleeve side. As the sleeve moves, the shifting key is moved axially and pushes the synchronizer ring, whereby a frictional force is generated between the synchronizer ring and the transmission gear, and the frictional force causes the inner peripheral teeth of the sleeve to mesh synchronously with the meshing teeth of the transmission gear. A reverse gear system having a reverse drive gear, a reverse driven gear, and a reverse idler gear provided therebetween is provided. The reverse drive gear, the reverse driven gear, and the reverse idler gear are meshed in a transmitting state by sliding axially a slide reverse gear, which is one of the reverse drive gear, the reverse driven gear and the reverse idler gear. The outer periphery side of the sleeve is integrated with an on-sleeve reverse gear, which is one of the reverse drive gear, the reverse driven gear and the reverse idler gear other than the slide reverse gear. Between the protrusion portion of the shifting key in a neutral state and the recess portion of the sleeve, a gap is provided on a side opposite to a direction in which the slide reverse gear slides, and at least a dimension that is obtained by subtracting an axial dimension of an initial gap between the shifting key in the neutral state and the synchronizer ring from an axial dimension of a maximum gap where the shifting key and the synchronizer ring do not contact with each other is secured as an axial dimension of the gap.

According to the above aspect, because the gap is provided at an end of the protrusion portion of the shifting key on the side opposite to the direction in which the slide reverse gear slides, the sleeve is pushed along with the slide reverse gear toward the synchronizer ring during the reverse shift operation. When the movement distance of the sleeve is greater than or equal to the dimension of the above-mentioned gap upon movement of the sleeve, the recess portion of the sleeve is not engaged with the protrusion portion of the shifting key. In this case, the shifting key neither is moved toward the synchronizer ring nor brought into contact with the synchronizer ring. Also, when the movement distance of the sleeve is greater than or equal to the dimension of the gap, the recess portion and the protrusion portion are engaged with each other and the shifting key moves toward the synchronizer ring but the movement distance of the shifting key does not exceed the dimension of the initial gap. In this case as well, the shifting key does not contact with the synchronizer ring.

Therefore, even when the sleeve moves toward the synchronizer ring during the reverse shift operation, the shifting key does not contact with the synchronizer ring. Thus, the synchronous pushing that occurs during the reverse shift operation can be avoided securely.

Moreover, compared to the configuration in which the initial gap between the shifting key and the synchronizer ring is enlarged to avoid the synchronous pushing occurring during the reverse shift operation, the return performance of the shifting key in its neutral state can be maintained well. Therefore, a return failure of the shifting key in its neutral state can be securely avoided. Furthermore, compared to the configuration in which shape of the protrusion portion of the shifting key or the shape of the recess portion of the sleeve is changed, change in the shift load (shift feeling) can be minimized during a shift change operation.

As described above, by devising the positional relationship between the protrusion portion of the shifting key and the recess portion of the sleeve, the change of the shift load can be minimized while avoiding the synchronous pushing that is caused by the shifting key during the reverse shift operation and the occurrence of the return failure of the shifting key in its neutral state.

The axial dimension of the gap between the protrusion portion of the shifting key and the recess portion of the sleeve may be equal to the dimension that is obtained by subtracting the axial dimension of the initial gap between the shifting key in the neutral state and the synchronizer ring from the axial dimension of the maximum gap where the shifting key and the synchronizer ring do not contact with each other.

Also, flat sections of the shifting key and of the sleeve may abut against each other when the shifting key is in its neutral state. In this case, the flat section of the shifting key may be a section on each side of the protrusion portion in the axial direction, and the flat section of the sleeve may be a section on each side of the recess portion in the axial direction. In addition, the flat section of the shifting key may form a top surface of the protrusion portion, and the flat section of the sleeve may form an inner wall surface of the recess portion.

According to this configuration, because the flat sections of the shifting key and of the sleeve abut against each other when the shifting key is in the neutral state, the load of the spring that presses the shifting key against the sleeve side hardly fluctuates when the sleeve moves with respect to the shifting key. Also, because the spring is stretched to the maximum when the shifting key is in the neutral state, the load of the spring acting on the shifting key and sleeve is reduced to the minimum. Therefore, a low and hardly fluctuating spring load which has less impact on the shift feeling can be obtained.

Moreover, the axial dimension of the gap between the protrusion portion of the shifting key and the recess portion of the sleeve may be set by changing an inclination start position of the protrusion portion or recess portion with respect to the protrusion portion or recess portion when the gap is not provided. Consequently, the shape of the protrusion portion of the shifting key or the shape of the recess portion of the sleeve can be kept as it is; which can contribute to inhibiting the change of the shift load.

Of the on-sleeve reverse gear, an end surface that is positioned in the direction of sliding the slide reverse gear may be reduced in a direction opposite to the direction of sliding the slide reverse gear by a dimension equivalent to the axial dimension of the gap between the protrusion portion of the shifting key and the recess portion of the sleeve, as compared to a case where the gap is not provided. Consequently, friction between the on-sleeve reverse gear and the transmission gear that is caused by moving the sleeve in the direction of sliding the slide reverse gear can be securely avoided.

According to the invention, devising the positional relationship between the protrusion portion of the shifting key and the recess portion of the sleeve can inhibit the change of the shift load (shift feeling) while avoiding the occurrence of the synchronous pushing performed by the shifting key during the reverse shift operation and the occurrence of the return failure of the shifting key in its neutral state.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a cross-sectional diagram showing a gear layout of a manual transmission according to an embodiment;
FIG. 2 is a cross-sectional diagram showing a first synchromesh mechanism;
FIG. 3 is a diagram for explaining an operation of the first synchromesh mechanism, wherein a state in which a sleeve is moved from its neutral position to a second shift position is shown;
FIG. 4 is a diagram for explaining the operation of the first synchromesh mechanism, wherein a state in which the sleeve is moved from its neutral position to a second shift position is shown;
FIG. 5 is a diagram for explaining a positional relationship between a protrusion portion of a shifting key of the first synchromesh mechanism and a key groove of the sleeve;
FIG. 6 is a diagram showing a change of characteristics of a shift load, which is caused by providing a gap between the protrusion portion of the shifting key and the key groove of the sleeve; and
FIG. 7 is a diagram for explaining a change of characteristics of a shift load when the gap is not provided between the protrusion portion of the shifting key and the key groove of the sleeve.

### DETAILED DESCRIPTION OF EMBODIMENTS

An embodiment of the invention will now be described with reference to the drawings. The description below explains the case where a synchronous meshing type manual transmission with a forward sixth speed stage and a backward first speed stage is used. The description below also explains a manual transmission mounted in a front-engine front-drive (FF) vehicle.

First, a gear layout of the manual transmission is described.

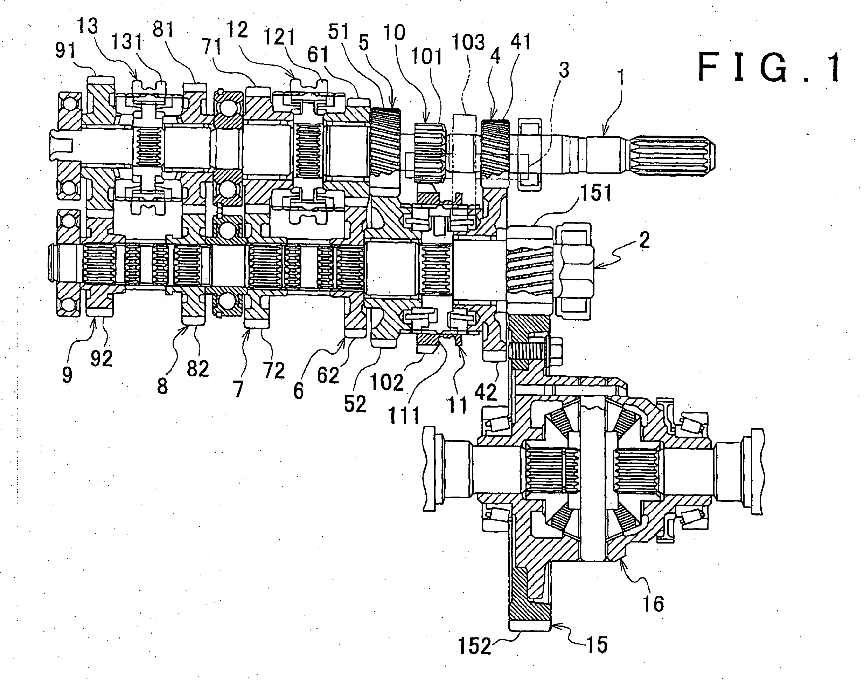

FIG 1 is a side view showing a cross section of a part of a gear layout of the manual transmission according to the embodiment. The gear layout shown in FIG 1 is accommodated in a transmission case that is not shown, wherein an input shaft 1, output shaft 2 and reverse shaft 3 (shown by virtual lines in FIG. 1) are supported rotatably by the transmission case.

The input shaft 1 is coupled to a crank shaft of an engine, not shown, by a clutch mechanism, and a rotation driving force of the engine is input by an engaging operation of this clutch mechanism.

A plurality of transmission gear trains 4 to 10 for establishing each of the forward first speed stage to forward sixth speed stage and backward speed stage are provided between the input shaft 1 and the output shaft 2. Specifically, for the forward stage gear trains, a first speed gear train 4, second speed gear train 5, third speed gear train 6, fourth speed gear train 7, fifth speed gear train 8, and sixth speed gear train 9 are disposed in this order from the right side toward the left side of FIG. 1 in an axial direction. For the backward stage gear train, a reverse gear train 10 is disposed.

The first speed gear train 4 has a first speed drive gear 41 mounted on the input shaft 1 in an integrally rotatable manner, and a first speed driven gear 42 incorporated in the output shaft 2 so as to be rotatable relative thereto, wherein these first speed drive gear 41 and first speed driven gear 42 are meshed with each other. The second speed gear train 5 has a second speed drive gear 51 mounted on the input shaft 1 in an integrally rotatable manner, and a second speed driven gear 52 incorporated in the output shaft 2 so as to be rotatable relative thereto; wherein these second speed drive gear 51 and second speed driven gear 52 are meshed with each other.

The third speed gear train 6 has a third speed drive gear 61 incorporated in the input shaft 1 so as to be rotatable relative thereto and a third speed driven gear 62 mounted on the input shaft 2 in an integrally rotatable manner, wherein these third speed drive gear 61 and third speed driven gear 62 are meshed with each other. The fourth speed gear train 7 has a fourth speed drive gear 71 incorporated in the input shaft 1 so as to be rotatable relative thereto and a fourth speed driven gear 72 mounted on the output shaft 2 in an integrally rotatable manner, wherein these fourth speed drive gear 71 and fourth speed driven gear 72 are meshed with each other.

The fifth speed gear train 8 has a fifth speed drive gear 81 incorporated in the input shaft 1 so as to be rotatable relative thereto and a fifth speed driven gear 82 mounted on the output shaft 2 in an integrally rotatable manner, wherein these fifth speed drive gear 81 and fifth speed driven gear 82 are meshed with each other. The sixth speed gear train 9 has a sixth speed drive gear 91 incorporated in the input shaft 1 so as to be rotatable relative thereto and a sixth speed driven gear 92 mounted on the output shaft 2 in an integrally rotatable manner, wherein these sixth speed drive gear 91 and sixth speed driven gear 92 are meshed with each other.

An operation of switching among the above-mentioned forward stage transmission gear trains 4 to 9 (shift operation) is carried out by three synchromesh mechanisms (synchronizers) 11, 12 and 13.

The first synchromesh mechanism 11 is a first-second speed synchronizer and provided on the output shaft 2 between the first speed driven gear 42 and the second speed driven gear 52. Specifically, when the first synchromesh mechanism 11 is activated to the first speed driven gear 42 side (that is, when a sleeve 111 moves to the first speed driven gear 42 side), the first speed driven gear 42 is coupled to the output shaft 2 in an integrally rotatable manner, and then power is transmitted from the input shaft 1 to the output shaft 2 between the first speed drive gear 41 and the first speed driven gear 42 (ftrst-speed).

On the other hand, when the first synchromesh mechanism 11 is activated to the second speed driven gear 52 (that is, when the sleeve 111 moves to the second speed driven gear 52 side), the second speed driven gear 52 is coupled to the output shaft 2 in an integrally rotatable manner, and then the power is transmitted from the input shaft 1 to the output shaft 2 between the second speed drive gear 51 and the second speed driven gear 52 (second-speed). The first synchromesh mechanism 11 is mechanically activated by a shift fork (not shown) engaged with the sleeve 111, in conjunction with a shift lever operation performed by a driver. Note that a synchronizer with a multicone synchromechanism is adopted as the first synchromesh mechanism 11. The detail of the first synchromesh mechanism 11 will be described later.

The second synchromesh mechanism 12 is a third-fourth speed synchronizer and provided on the input shaft 1 between the third speed drive gear 61 and the fourth speed drive gear 71. Specifically, when the second synchromesh mechanism 12 is activated to the third speed drive gear 61 side (that is, when a sleeve 121 moves to the third speed drive gear 61 side), the third speed drive gear 61 is coupled to the input shaft 1 in an integrally rotatable manner, and then the power is transmitted from the input shaft 1 to the output shaft 2 between the third speed drive gear 61 and the third speed driven gear 62 (third-speed).

On the other hand, when the second synchromesh mechanism 12 is activated to the fourth speed drive gear 71 (that is, when the sleeve 121 moves to the fourth speed drive gear 71 side), the fourth speed drive gear 71 coupled to the input shaft 1 in an integrally rotatable manner, and then the power is transmitted from the input shaft 1 to the output shaft 2 between the fourth speed drive gear 71 and the fourth speed driven gear 72 (fourth-speed). The second synchromesh mechanism 12 is mechanically activated by the shift fork (not shown) engaged with the sleeve 121, in conjunction with the shift lever operation performed by the driver. Note that a synchronizer with a multicone synchromechanism is adopted as the second synchromesh mechanism 12.

The third synchromesh mechanism 13 is a fifth-sixth speed synchronizer and provided on the input shaft 1 between the fifth speed drive gear 81 and the sixth speed drive gear 91. Specifically, when the third synchromesh mechanism 13 is activated to the fifth speed drive gear 81 side (that is, when a sleeve 131 moves to the fifth speed drive gear 81 side), the fifth speed drive gear 81 is coupled to the input shaft 1 in an integrally rotatable manner, and then the power is transmitted from the input shaft 1 to the output shaft 2 between the fifth speed drive gear 81 and the fifth speed driven gear 82 (fifth-speed).

On the other hand, when the third synchromesh mechanism 13 is activated to the sixth speed drive gear 91 side (that is, when the sleeve 131 moves to the sixth speed drive gear 91 side), the sixth speed drive gear 91 is coupled to the input shaft 1 in an integrally rotatable manner, and then the power is transmitted from the input shaft 1 to the output shaft 2 between the sixth speed drive gear 91 and the sixth speed driven gear 92 (sixth-speed). The third synchromesh mechanism 13 is mechanically activated by the shift fork (not shown) engaged with the sleeve 131, in conjunction with the shift lever operation performed by the driver. Note that a synchronizer with a multicone synchromechanism is adopted as the third synchromesh mechanism 13.

In this manner, when moving forward, the rotation driving force of the input shaft 1 is transmitted to the output shaft 2 through one of the transmission gear trains 4 to 9 that is selected by the activation of any one of the synchromesh mechanisms 11, 12 and 13 except during a shift change operation.

On the other hand, the backward stage reverse gear train 10 has a reverse drive gear 101 mounted on the input shaft 1 in an integrally rotatable manner, a reverse driven gear 102 incorporated in the output shaft 2 in an integrally rotatable manner, and a reverse idler gear 103 (shown by a virtual line in FIG 1) incorporated in the reverse shaft 3 so as to be slidably moved relative to the reverse shaft 3. The reverse driven gear 102 is disposed on the outer periphery side of the sleeve 111 of the first synchromesh mechanism 11 in an integrally rotatable manner.

These gears 101, 102 and 103 are not meshed with one another upon forward movement. In the case of backward running, all of the synchromesh mechanisms 11, 12 and 13 are set to their neutral states, and the reverse idler gear 103 is meshed with both the reverse drive gear 101 and the reverse driven gear 102 by moving in an axial direction of the reverse shaft 3. Consequently, the reverse driven gear 102 rotates in a direction opposite to the direction of rotation of the reverse drive gear 101. Therefore, the output shaft 2 rotates in a direction opposite to the direction in which it rotates when the forward stage transmission gear is used, and driven wheels (not shown) rotate in the backward direction. Then a reverse arm (not shown) moves the reverse idler gear 103 in the axial direction of the reverse shaft 3 in conjunction with the shift lever operation performed by the driver.

As described above, the rotation driving force that is transmitted to the output shaft 2 by performing shifting at a predetermined transmission gear ratio or by the reverse rotation is transmitted to a differential 16 after the rotational speed of the output shaft 2 is reduced according to a final reduction ratio of a final reduction gear train 15 configured by a final drive gear 151 and final driven gear 152. Consequently, the driven wheels (not shown) rotate in the forward direction or backward direction. Note that a select/shift mechanism for selectively transmitting the operating force of the shift lever selectively to the synchromesh mechanisms 11, 12, 13 or reverse arm is provided in order to establish any of the forward first to sixth speed stages and backward speed stage.

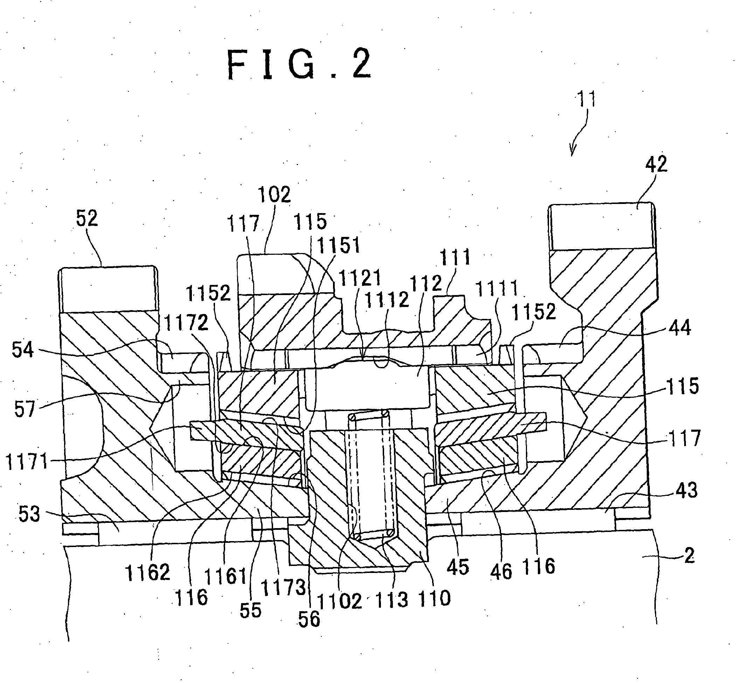

Next, a specific configuration of the first-second speed first synchromesh mechanism 11 provided on the output shaft 2 is described with reference to FIG. 2. FIG. 2 shows a cross section of the first synchromesh mechanism 11. Note that the third-fourth speed second synchromesh mechanism 12 and the fifth-sixth speed third synchromesh mechanism 13 that are provided on the input shaft 1 also have substantially the same configuration.

The first synchromesh mechanism 11 has a clutch hub 110, the sleeve 111, a shifting key 112, spring 113, outer synchronizer ring 115, inner synchronizer ring 116, middle ring 117, and first speed driven gear 42 and second speed driven gear 52 that function as the transmission gears. The first synchromesh mechanism 11 couples the clutch hub 110 selectively to the first speed driven gear 42 and the second speed driven gear 52 by moving the sleeve 111 to one side or the other side in the axial direction. Note that the shifting key 112 and spring 113 are disposed on a circumferential direction in plurality (three, for example) at substantially equal angular intervals.

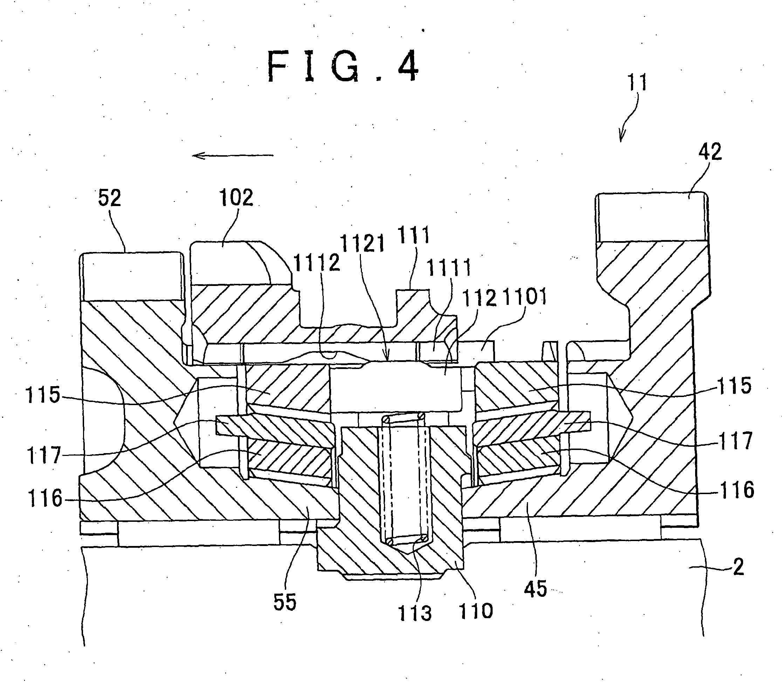

The clutch hub 110 has outer peripheral teeth 1101 (see FIG 4) and is disposed by spline-fitting so as to be unrotatable relative to the output shaft 2. The axial position of the clutch hub 110 is determined by a snap ring, which not shown, or the first speed driven gear 42 and second speed driven gear 52 that are disposed on both sides of the clutch hub 110 in the axial direction. The first speed driven gear 42 and the second speed driven gear 52 are disposed on the output shaft 2 by needle bearings 43, 53 so as to be rotatable relative to the output shaft 2, and the axial positions of these gears are determined by the snap ring, which is not shown.

The sleeve 111 having a substantially cylindrical shape has inner peripheral teeth 1111 that are meshed with the outer peripheral teeth 1101 of the clutch hub 110, and a recess portion (key groove) 1112 that is provided on the inner periphery side at the center in a width direction (the axial direction). The reverse driven gear 102 is integrally provided on the outer periphery side of the sleeve 111, as described above.

The sleeve 111 is spline-fitted to the outer periphery of the clutch hub 110 so as to be relatively unrotatable but axially and relatively movable with respect to the clutch hub 110, and is disposed so as to be able to move to a shifting position (transmitting position) where power transmission can be realized by the shift fork, which is not shown, and a neutral position where power transmission is blocked, that is, the position shown in FIG 2. In this embodiment, the shifting position of the sleeve 111 is in a first speed position moved to one side in the axial direction (right side in FIG 2) and a second speed position moved to the other side in the axial direction (left side in FIG. 2).

The first speed driven gear 42 has meshing teeth 44 that are meshed with the inner peripheral teeth 1111 of the sleeve 111 when the sleeve 111 is moved to the first speed position. Similarly, the second speed driven gear 52 has meshing teeth 54 that are meshed with the inner peripheral teeth 1111 of the sleeve 111 when the sleeve 111 is moved to the second speed position. Therefore, when the first-speed or second-speed is selected, the power is transmitted from the first speed driven gear 42 or second speed driven gear 52 to the output shaft 2 through the sleeve 111 and clutch hub 110. In sections (tapered sections) 45, 55 of the first speed driven gear 42 and the second speed driven gear 52 in the vicinity of the clutch hub 110, outer peripheral tapered surfaces (outer peripheral cone surfaces) 46, 56 that are tapered toward the clutch hub 110 are formed adjacent to the clutch hub 110.

The shifting key 112 is interposed between the clutch hub 110 and the sleeve 111 so as to be relatively unrotatable but axially movable with respect to the clutch hub 110. Also, the shifting key 112 is capable of moving inward and outward in the radial direction, depending on the axial position of the sleeve 111. Specifically, the shifting key 112 is disposed within a cutout that is formed axially on the outer periphery of the clutch hub 110. The shifting key 112 is urged outward in the radial direction by the spring 113 disposed within a recess portion 1102 of the clutch hub 110 in a compressed manner.

The shifting key 112 is provided with a protrusion portion 1121 protruding outward in the radial direction. The protrusion portion 1121 and the key groove 1112 are engaged with each other when the sleeve 111 is moved to the shifting position. The protrusion portion 1121 and the key groove 1112 are also formed such that the shifting key 112 is returned to the above-mentioned neutral position when the sleeve 111 is returned to its neutral position. The shapes and positional relationship of the protrusion portion 1121 of the shifting key 112 and the key groove 1112 of the sleeve 111 are described later.

The outer synchronizer ring 115, inner synchronizer ring 116 and middle ring 117 are each a pair of synchronizer rings that generate a frictional force for realizing synchronous rotation. Each of these ring pairs 115, 116, 117 is provided on both sides of the clutch hub 110 in the axial direction. Specifically, a first-speed outer synchronizer ring 115, first-speed inner synchronizer ring 116, and first-speed middle ring 117 are provided between the clutch hub 110 and the first speed driven gear 42. Also, a second-speed outer synchronizer ring 115, second-speed inner synchronizer ring 116, and second-speed middle ring 117 are provided between the clutch hub 110 and the second speed driven gear 52. Each of the first-speed rings 115, 116, 117 and each of the second-speed rings 115, 116, 117 have the same configuration. Therefore, the second-speed rings 115, 116, 117 are mainly described hereinafter.

The middle ring 117 is disposed between the outer synchronizer ring 115 and the inner synchronizer ring 116. The middle ring 117 is not capable of rotating relative to the clutch hub 110. The position of the middle ring 117 is determined, between the clutch hub 110 and the second speed driven gear 52, by inserting protruding portions 1171 into a plurality of holes 57 provided, in a circumferential direction, on the clutch hub 110 side of the second speed driven gear 52, the protruding portions 1171 being provided in the positions corresponding to the holes 57. The middle ring 117 is capable of rotating and moving axially along with the second speed driven gear 52. The middle ring 117 also has an inner peripheral tapered surface (inner peripheral cone surface) 1172 and outer peripheral tapered surface (outer peripheral cone surface) 1173 that are tapered toward the clutch hub 110.

The outer synchronizer ring 115 is disposed on an outer periphery side of the middle ring 117. The outer synchronizer ring 115 is also disposed on the inner periphery side of the sleeve 111. The outer synchronizer ring 115 is capable of rotating relatively to the clutch hub 110 by a predetermined circumferential range. The outer synchronizer ring 115 is also capable of moving axially between an axial inward position adjacent to the clutch hub 110 and an axial outward position adjacent to the second speed driven gear 52. Moreover, the outer synchronizer ring 115 has an inner peripheral tapered surface (inner peripheral cone surface) 1151 that is brought into sliding contact with the outer peripheral tapered surface 1173 of the middle ring 117, and outer peripheral engaging teeth 1152 that are brought into engagement with the inner peripheral teeth 1111 of the sleeve 111 to block the axial movement of the sleeve while the sleeve 111 and the second speed driven gear 52 are relatively rotated or, in other words, until the sleeve 111 and the second speed driven gear 52 are synchronously rotated.

The inner synchronizer ring 116 is disposed on the inner periphery side of the middle ring 117. The inner synchronizer ring 116 is also disposed on an outer periphery side of the tapered section 55 of the second speed driven gear 52. The inner synchronizer ring 116 is not capable of rotating relative to the clutch hub 110. The inner synchronizer ring 116 has an outer peripheral tapered surface (outer peripheral cone surface) 1161 that is brought into sliding contact with the inner peripheral tapered surface 1172 of the middle ring 117, and an inner peripheral tapered surface (inner peripheral cone surface) 1162 that is brought into sliding contact with the outer peripheral tapered surface 56 of the second speed driven gear 52.

As described above, the first synchromesh mechanism 11 is a synchronizer with a multicone synchromechanism in which an intermediate cone ring constituted by the inner synchronizer ring 116 and middle ring 117 is provided between the outer synchronizer ring 115 and the tapered section 55 of the second speed driven gear 52. Specifically, because of this intermediate cone ring, the substantial contact area between the outer synchronizer ring 115 and the tapered section 55 of the second speed driven gear 52 increases, intensifying the frictional force generated therebetween.

Next, an operation of the first synchromesh mechanism 11 is simply described. Herein, the following describes the case where the sleeve 111 is moved axially from its neutral position toward the second speed position.

First of all, when the sleeve 111 shown in FIG 2 is in its neutral position, the inner peripheral teeth 1111 of the sleeve 111 are not meshed with the meshing teeth 44 of the first speed driven gear 42 or the meshing teeth 54 of the second speed driven gear 52. For this reason, power transmission cannot be performed between the first speed drive gear 41 and the first speed driven gear 42 and between the second speed drive gear 51 and the second speed driven gear 52. The sleeve 111 is in its neutral position when shift change to any of the third to sixth speed stages is performed and when shift change to the backward speed stage is performed (reverse shift).

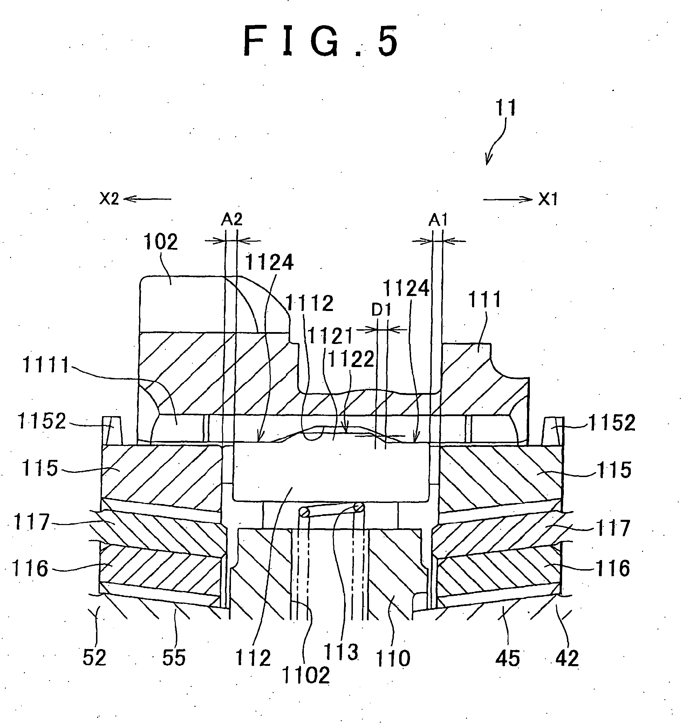

Moreover, when the sleeve 111 is in its neutral position, the shifting key 112 is also in its neutral position. Specifically, the protrusion portion 1121 of the shifting key 112 is positioned within the key groove 1112 of the sleeve 111. At this moment, gaps A1, A2 are each formed between the shifting key 112 and each of the pair of outer synchronizer rings 115 provided on both sides of the shifting key 112 in the axial direction (see FIG 5). These gaps A1, A2 are the initial gaps formed when the shifting key 112 is in its neutral position. Note that the gaps A1, A2 can be formed into the same dimension, in which case the shifting key 112 is disposed in the middle between the pair of outer synchronizer rings 115 in the axial direction.

In this state, the shifting key 112 is pressed toward the sleeve 111 by the urging force of the spring 113, whereby the shifting key 112 and the sleeve 111 are engaged with each other. In the neutral position of the shifting key 112, the spring 113 is stretched to the maximum and the load of the spring 113 that acts on the shifting key 112 and sleeve 111 is reduced to the minimum.

When the sleeve 111 is moved from its neutral position toward the second speed position, the protrusion portion 1121 of the shifting key 112 and the key groove 1112 of the sleeve 111 are brought into engagement with each other, whereby the shifting key 112 is moved toward the second speed position along with the sleeve 111. Consequently, the gap between the shifting key 112 and the second-speed outer synchronizer ring 115 is narrowed, whereby the outer synchronizer ring 115 is pushed by the shifting key 112.

Such movement of the outer synchronizer ring 115 to the second speed position generates frictional forces between the inner peripheral tapered surface 1151 of the outer synchronizer ring 115 and the outer peripheral tapered surface 1173 of the middle ring 117, between the inner peripheral tapered surface 1172 of the middle ring 117 and the outer peripheral tapered surface 1161 of the inner synchronizer ring 116, and between the inner peripheral tapered surface 1162 of the inner synchronizer ring 116 and the outer peripheral tapered surface 56 of the second speed driven gear 52. These frictional forces cause the sleeve 111 and the second speed driven gear 52 to rotate relatively.

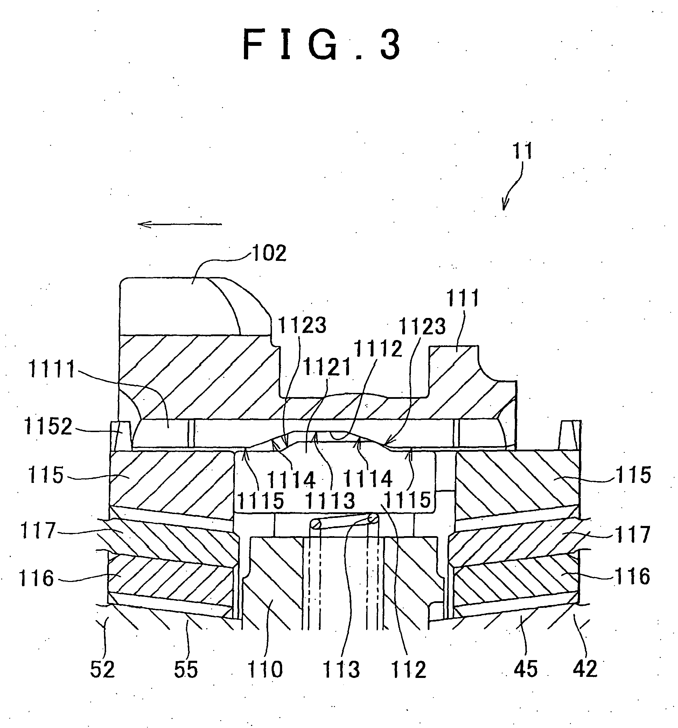

The sleeve 111 is in the course of moving to the second speed position while the sleeve 111 and the second speed driven gear 52 are rotated relatively or, in other words, until the sleeve 111 and the second speed driven gear 52 are rotated synchronously (this state is shown in FIG. 3). In this state, the sleeve 111 pushes the shifting key 112 slightly inwardly in the radial direction.

In the state shown in FIG. 3, the inner peripheral teeth 1111 of the sleeve 111 are meshed with the outer peripheral engaging teeth 1152 of the outer synchronizer ring 115, but not with the meshing teeth 54 of the second speed driven gear 52. When the sleeve 111 and the second speed driven gear 52 are rotated synchronously, the sleeve 111 becomes able to move to the second speed position and consequently the inner peripheral teeth 1111 of the sleeve 111 arc brought into mesh with the meshing teeth 54 of the second speed driven gear 52, whereby power transmission can be realized (this state is shown in FIG. 4). Specifically, the second speed driven gear 52 is coupled to the output shaft 2 in an integrally rotatable manner so that the power can be transmitted from the input shaft 1 to the output shaft 2 between the second speed drive gear 51 and the second speed driven gear 52.

When the sleeve 111 shown in FIG. 4 is in the second speed position, the protrusion portion 1121 of the shifting key 112 is placed in a position away from the key groove 1112 to one side in the axial direction (first speed position), instead of being positioned within the key groove 1112 of the sleeve 111. In this state, the sleeve 111 pushes the shifting key 112 to the deepest level inwardly in the radial direction. For this reason, compared to the time when the shifting key 112 is in its neutral position, the spring 113 is compressed and the load of the spring 113 that acts on the shifting key 112 and the sleeve 111 is increased.

On the other hand, in the case where the sleeve 111 is moved from the second speed position to its neutral position in the vicinity of the first speed position in the axial direction, the sleeve 111 is moved from the second speed position toward the first speed position in the axial direction so that the mesh between the inner peripheral teeth 1111 of the sleeve 111 and the meshing teeth 54 of the second speed driven gear 52 is released. As a result, power transmission between the second speed drive gear 51 and the second speed driven gear 52 cannot be performed. When the sleeve 111 is returned from the second speed position to the neutral position, the protrusion portion 1121 of the shifting key 112 is returned into the key groove 1112 of the sleeve 111 and the shifting key 112 to its neutral position.

Next, the shapes and positional relationship of the protrusion portion 1121 of the shifting key 112 and the key groove 1112 of the sleeve 111 are described. In this embodiment, by devising the shapes and the positional relationship of the protrusion portion 1121 of the shifting key 112 and the key groove 1112 of the sleeve 111, the change of the shift load (change of shift feeling) can be minimized while avoiding the synchronous pushing that is caused by the shifting key 112 during the reverse shift operation and the occurrence of the return failure of the shifting key 112 in its neutral state. The detail is described hereinafter.

In this embodiment, a gap D1 is provided between the protrusion portion 1121 of the shifting key 112 and the key groove 1112 of the sleeve 111, as shown in FIG 5. This gap D1 is provided only on one side of the protrusion portion 1121 in the axial direction (in a direction of X1 side in FIG 5), but not on the other side of the protrusion portion 1121 in the axial direction (in a direction of X2 side in FIG 5). Specifically, in the neutral position of the shifting key 112, the protrusion portion 1121 and the key groove 1112 are apart from each other on the above-mentioned one side in the axial direction by the gap D1 but are engaged with each other on the above-mentioned other side in the axial direction. Specifically, the gap D1 is provided so as to correspond to a slide direction of the reverse idler gear 103 (the X2 direction in FIG 5) upon reverse shifting. More specifically, the gap D1 is provided only in a section on the rear side of the protrusion portion 1121 with respect to the slide direction of the reverse idler gear 103 (opposite side), but not in a section on the front side.

The gap D1 is formed into the following dimension (axial dimension). Specifically, assuming that there is a gap B0 (maximum gap) where the shifting key 112 and the outer synchronizer ring 115 are not brought into contact with each other, the gap D1 is formed into a dimension so that the relationship of [D1 = B0 - A2] is satisfied. The gap B0 is set in consideration of product variation of the first synchromesh mechanism 11 and control variation caused when controlling the first synchromesh mechanism 11. Specifically, the axial dimension of the gap B0 is a distance obtained by subtracting an axial movement distance of the shifting key 112 caused by the tilt of the sleeve 111 during reverse shift operation from the axial dimension of a gap between the outer synchronizer ring 115 and the shifting key 112 in a state in which the sleeve 111, fork (not shown) and shifting key 112 are in a position closest to the second driven gear 52, and the second driven gear 52 and the outer synchronizer ring 115 are in a position closest to the sleeve 111 in a neutral state of the shifting key 112. The gap A2 is, as described above, the initial gap formed when the shifting key 112 is in its neutral position, and is set in consideration of the specifications of the first synchromesh mechanism 11 and shift load (shift feeling). Therefore, the gap A2 is formed into a dimension that does not cause, for example, the return failure of the shifting key 112.

Here, a top surface 1122 of the protrusion portion 1121 of the shifting key 112, the surface protruding outward most, is formed into a flat surface. On the other hand, side surfaces 1123 (see FIG 3) that are provided on both sides of the top surface 1122 of the protrusion portion 1121 in the axial direction are formed into curved surfaces. In addition, sections 1124, 1124 that are provided on both sides of the protrusion portion 1121 of the shifting key 112 in the axial direction are also formed into flat surfaces. Note that the side surfaces 1123 may be formed into any surfaces other than curved surfaces.

An inner wall surface 1113 of the key groove 1112 of the sleeve 111 (see FIG. 3), which is the surface depressed outward most, is formed into a flat surface. On the other hand, side wall surfaces 1114 (see FIG. 3) that are provided on both sides of the inner wall surface 1113 of the key groove 1112 in the axial direction are formed into inclined surfaces inclined at a predetermined angle. In addition, sections 1115 (see FIG. 3) that are provided on both sides of the key groove 1112 of the sleeve 111 in the axial direction are also formed into flat surfaces. Note that the side wall surfaces 1114 may be formed into curved surfaces.

In the neutral position of the shifting key 112, the above-mentioned gap D1 is formed between the side surface 1123 on one side of the protrusion portion 1121 of the shifting key 112 in the axial direction (first speed position side) and the side wall surface 1114 on one side of the key groove 1112 of the sleeve 111. In this case, the dimension of the gap D1 is the axial distance between the side wall surface 1114 and a tangent line parallel to the side wall surface 1114 on the side surface 1123. In other words, the dimension of the gap D1 is the distance between the side wall surface 1114 and the side surface 1123 that extend along the axial direction in the position where the side surface 1123 and the side wall surface 1114 are engaged with each other (position in the vertical direction of the diagram) when the sleeve 111 is moved axially toward the other side (second speed position side). On the other hand, the side surface 1123 of the recess portion 1121 of the shifting key 112 in the vicinity of the second speed position is in contact with the side wall surface 1114 of the key groove 1112 of the sleeve 111 in the vicinity of the second speed position.

In addition, in the neutral position of the shifting key 112, the flat sections of the shifting key 112 and of the sleeve 111 are in abutment against each other. Specifically, the sections 1124 on both sides of the shifting key 112 in the axial direction are in abutment against the sections 1115 provided on both sides of the sleeve 111 in the axial direction. Therefore, the sections provided on both sides of the flat sleeve 111 in the axial direction receive the load of the spring 113.

In this embodiment, because the above-mentioned gap D1 is provided, the synchronous pushing that is caused by the shifting 112 during the reverse shift operation (in this case, the synchronous pushing involving the second-speed outer synchronizer ring 115) can be avoided. Specifically, during reverse shift operation, the reverse driven gear 102 is pressed and tilted by the reverse idler gear 103 that slides in the X2 direction, whereby the sleeve 111 is also tilted in the same direction as the reverse driven gear 102. As a result, the sleeve 111 is moved axially to the other side (i.e., to the second-speed outer synchronizer ring 115 side) by the axial tilt of the sleeve 111.

In this embodiment, the gap D1 is provided in the section on the rear side of the protrusion portion 1121 with respect to the slide direction of the reverse idler gear 103. Therefore, even when the sleeve 111 is moved to the second-speed outer synchronize ring 115 during the reverse shift operation, when the movement distance of the sleeve 111 is smaller than the dimension of the gap D1 the key groove 1112 of the sleeve 111 is not brought into engagement with the protrusion portion 1121 of the shifting key 112. In this case, the shifting key 112 is not moved to the second-speed outer synchronizer ring 115 and is not brought into contact with the second-speed outer synchronizer ring 115.

Moreover, when the movement distance of the sleeve 111 is greater than or equal to the dimension of the gap D1, the key groove 1112 is brought into engagement with the protrusion portion 1121 and the shifting key 112 is moved to the second-speed outer synchronizer ring 115. However, the movement distance of the shifting key 112 does not exceed the dimension of the gap A2. In this case, the shifting key 112 is not brought into contact with the second-speed outer synchronizer ring 115.

As described above, even when the sleeve 111 is moved to the second-speed outer synchronizer ring 115 during the reverse shift operation, the shifting key 112 is not brought into contact with the second-speed outer synchronizer ring 115. Therefore, the synchronous pushing that is caused during the reverse shift operation can be avoided securely.

Incidentally, in the case where the above-mentioned gap D1 is not provided between the protrusion portion 1121 of the shifting key 112 and the key groove 1112 of the sleeve 111, the following countermeasures need to be implemented in order to securely avoid the occurrence of synchronous pushing caused during the reverse shift operation and the occurrence of the return failure of the shifting key when it is in its neutral position. Specifically, a gap with a dimension equivalent to the dimension of the gap B0 needs to be secured between the shifting key 112 and the second-speed outer synchronizer ring 115 and the shape of the protrusion portion 1121 of the shifting key 112 or the key groove 1112 of the sleeve 111 needs to be changed.

Specifically, in order to avoid the synchronous pushing caused by the shifting key 1112 during the reverse shift operation, the gap between the shifting key 112 and the second-speed outer synchronizer ring 115 needs to be expanded. Furthermore, in order to avoid the return failure of the shifting key 112 that is caused due to the gap expansion when the shifting key 112 is in its neutral state, the shape of the protrusion portion 1121 of the shifting key 112 or of the key groove 1112 of the sleeve 111 needs to be changed so as to secure the return performance of the shifting key 112. In this case, the shifting key 112 can be returned to its neutral position easily by changing the shape of, for example, the inclined surface (inclination angle) of the key groove 1112 of the sleeve 111 to a moderately inclined shape.

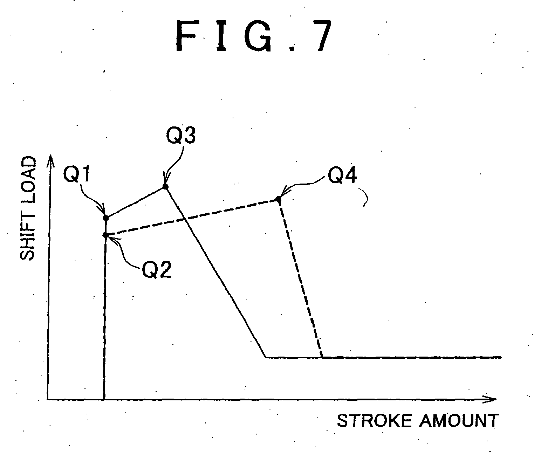

However, changing the shape of the protrusion portion 1121 of the shifting key 112 or of the key groove 1112 of the sleeve 111 changes the characteristics of the shift load during the shift change operation, as well as the shift feeling. As a result, a shift load that is different from initially expected (prior to the change) is obtained. For example, when the shape of the inclined surface of the key groove 1112 of the sleeve 111 is changed to a moderately inclined shape, the characteristics of the shift load are changed as shown in FIG. 7. FIG 7 shows the characteristics of the shift load that is obtained when shift change to the second speed stage is performed, that is, when the sleeve 111 is moved from its neutral position to the second speed position. In this drawing the horizontal axis represents the amount of operation (stroke amount) of the shift lever. Also, in FIG. 7, the characteristics of the shift load that is initially expected prior to changing the shape of the key groove 1112 are shown by a solid line, while the characteristics of the shift load obtained after changing the inclined surface of the key groove 1112 to a moderately inclined shape are shown by a dashed line.

As shown in FIG 7, unlike the case where the shape of the key groove 1112 is not changed to a moderate shape, a long time is required between a point of time at which the shifting key 112 is brought into contact with the outer synchronizer ring 115 (the case where the shape of the key groove 1112 is not change is represented as Q1 and the case
where it is changed is represented as Q2 in FIG 7) and a point of time at which synchronous rotation of the sleeve 111 and second speed driven gear 52 is completed (the case where the shape of the key groove 1112 is not changed is represented as Q3 and the case where it is changed is represented as Q4 in FIG. 7) in the case where the shape of the key groove 1112 is changed to a moderate shape; which leads to a degradation of the shift feeling. Therefore, in the configuration in which the gap D1 is not provided between the protrusion portion 1121 of the shifting key 112 and the key groove 1112 of the sleeve 111, the shift feeling is degraded by attempting to avoid the synchronous pushing caused by the shifting key 112 during the reverse shift operation and the occurrence of the return failure of the shifting 112 in its neutral state.

On the other hand, because the gap D1 is provided between the protrusion portion 1121 of the shifting key 112 and the key groove 1112 of the sleeve 111 in this embodiment, the synchronous pushing caused by the shifting key 112 during the reverse shift operation and the occurrence of the return failure of the shifting key 112 in its neutral state can be avoided without degrading the shift feeling.

Specifically, the gap A2 between the shifting key 112 and the second-speed outer synchronizer ring 115 is maintained as it is without being expanded, and thus the return performance of the shifting key 112 in its neutral state is not deteriorated. Therefore, the return failure of the shifting key 112 in its neutral state can be avoided securely.

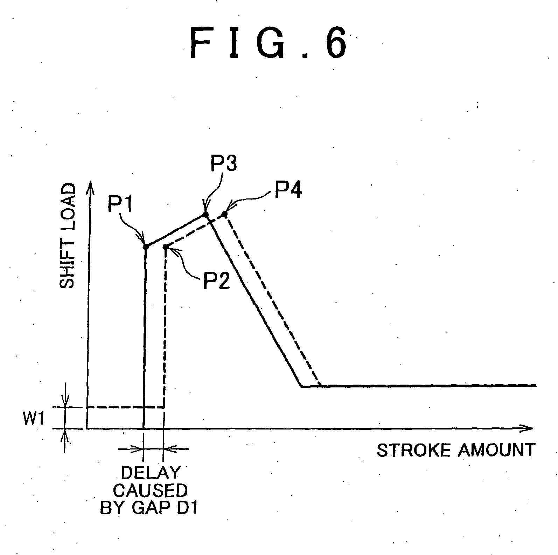

Furthermore, because the shapes of the protrusion portion 1121 of the shifting key 112 and of the key groove 1112 of the sleeve 111 are maintained as-is without being changed, the shift load is prevented from being changed during the shift change operation. Specifically, although the characteristics of the shift load are slightly changed during the shift change operation as shown in FIG. 6, change in the characteristics of the shift load is minimized more as compared to the case shown in FIG. 7. FIG. 6 shows the characteristics of the shift load obtained when the shift change operation to the second speed stage is performed, wherein the horizontal axis represents the amount of operation (stroke operation) of the shift lever by the driver. In FIG. 6, the characteristics of the shift load that is initially expected when the gap D1 is not provided are shown by a solid line, while the characteristics of the shift load obtained when the gap D1 is provided are shown by a dashed line.

As shown in FIG. 6, compared to the case where the gap D1 is not provided, substantially the same amount of time is required between a point of time at which the shifting key 112 is brought into contact with the outer synchronizer ring 115 (the case where the gap D1 is not provided is represented as P1 and the case where it is provided is represented as P2 in FIG. 6) and a point of time at which synchronous rotation of the sleeve 111 and second speed driven gear 52 is completed (the case where the gap D1 is not provided is represented as P3 and the case where it is provided is represented as P4 in FIG. 6) in the case where the gap D1 is provided. Therefore, a shorter length of time is required as compared with a case shown in FIG 7, and degradation of the shift feeling can be avoided.

More specifically, unlike the case where the gap D1 is not provided, although a delay occurs in rising of the shift load in the case where the gap D1 is provided, the characteristics of the risen shift load are the same as those of the shift load obtained when the gap D1 is not provided. This delay is generated by the stroke amount equivalent to the gap D1. Specifically, compared to the case where the gap D1 is not provided, when the gap D1 is provided the sleeve 111 needs to be moved more by the dimension of the gap D1 in order to move the shifting key 112 to the position where it comes into contact with the outer synchronizer ring 115. The stroke amount that is required to move the sleeve 111 by the dimension of the gap D1 is expressed in the form of the delay in the rising of the shift load.

In the case where the gap D1 is provided, the shift load obtained before it rises is slightly different from the shift load obtained when the gap D1 is not provided. Specifically, the load of the spring 113 (represented as W1 in FIG. 6) has an impact on the shift load. In this embodiment, because the spring 113 is stretched to the maximum in the neutral position of the shifting key 112 as described above, the load of the spring 113 that acts on the shifting key 112 and sleeve 111 is reduced to the minimum. The load of the spring 113 that is obtained when the spring 113 is stretched to the maximum is preferably set at a low load so as not to have an impact on the shift feeling.

In addition, because the flat sections of the shifting key 112 and sleeve 111 are in abutment against each other in the neutral position of the shifting key 112, the load of the spring 113 hardly fluctuates when the sleeve 111 is moved to the shifting key 112. Therefore, the load of the spring 113 can be reduced to a load that hardly fluctuates, whereby the impact on the shift feeling can be minimized.

Here, in order not to change the shapes of the protrusion portion 1121 of the shifting key 112 and the key groove 1112 of the sleeve 111 (inclination angle), the dimension of the gap D1 is preferably set by changing the position where the protrusion portion 1121 of the shifting key 112 or the key groove 1112 of the sleeve 111 starts inclining in the case where the gap D1 is not provided. In other words, the dimension of the gap D1 is preferably set by changing the position where the side surface 1123 of the protrusion portion 1121 starts inclining or the position where the side wall surface 1114 of the key groove 1112 starts inclining.

Also, because the gap D1 is provided in this embodiment, the axial movement distance of the sleeve 111 to the second speed position and the movement distance of the reverse driven gear 102 provided on the outer periphery side of the sleeve 111 are increased by the dimension of the gap D1 as compared to the case where the gap D1 is not provided. Therefore, in order to securely avoid a friction between the reverse driven gear 102 and the second speed driven gear 52 that is caused by moving the sleeve 111 to the second speed position, an end surface of the reverse driven gear 102 in the vicinity of the second speed position in the axial direction is preferably reduced (retreated) toward the above-mentioned one side (first speed position side) in the axial direction by the dimension equivalent to the dimension of the gap D1, as compared to the case where the gap D1 is not provided.

While the embodiment of the invention has been illustrated above, it is so understood that the invention is not limited to details of the illustrated embodiment, but may be embodied with various changes, modifications or improvements, which may occur to those skilled in the art, without departing from the spirit and scope of the invention. One of the examples is described hereinafter.

Although the above embodiment is provided with the three synchronizer rings of the outer synchronizer ring 115, inner synchronizer ring 116 and middle ring 117, the number of the synchronizer rings may be other than three.

Although the sleeve 111 of the first-second speed first synchromesh mechanism 11 is provided with the reverse driven gear 102 in this embodiment, the reverse driven gear 102 may be provided on a sleeve other than the sleeve 111. Also, the slide direction of the reverse idler gear 103 may be reversed.

The above embodiment has described the case where the gap D1 between the protrusion portion 1121 of the shifting key 112 and the key groove 1112 of the sleeve 111 is set at a dimension in which the relationship of [D1 = B0 - A2] is satisfied. However, it is sufficient that the dimension of the gap D1 be secured at least according to this relationship. Because the gap D1 is the cause of the above-mentioned delay (see FIG. 6), the smaller the dimension of the gap D1, the better.

The above embodiment has described the case where the section 1124 provided on cach side of the shifting key 112 in the axial direction is in abutment against the section 1115 provided on each side of the sleeve 111 in the axial direction when the flat sections of the shifting key 112 and of the sleeve 111 are in abutment against each other in the neutral position of the shifting key 112. However, the top surface 1122 of the shifting key 112 and the inner wall surface 1113 of the sleeve 111 may be brought into abutment against each other.

The synchronous meshing type manual transmission with a forward sixth speed stage and a backward first speed stage, which is mounted in a FF vehicle, has been described in the above embodiment. This invention is not limited to this manual transmission and thus can be applied to a manual transmission that is mounted in a front-engine rear-drive (FR) vehicle or other type of vehicle. This invention can also be applied to a transmission with different speed stages (for example, a transmission with forward five speed stages and a backward one speed stage). In addition, this invention can be applied to a transmission, i.e., Sequential Manual Transmission (SMT) that is provided with an actuator operated in conjunction with the shift change operation performed by the driver and performs shifting operation using this actuator.

## Claims

1. A synchronizer for a transmission, including: a clutch hub (110) that is disposed on a rotation shaft so as to be unrotatable relative thereto; a sleeve (111) that is disposed on an outer periphery of the clutch hub so as to be relatively unrotatable but axially relatively movable with respect to the clutch hub and is provided with inner peripheral teeth and recess portion on an inner periphery of the sleeve; a transmission gear (42, 52) that is disposed adjacent to the clutch hub so as to be rotatable relative to the rotation shaft and is provided with meshing teeth to be meshed with the inner peripheral teeth of the sleeve and an outer peripheral tapered surface tapered toward the clutch hub; a synchronizer ring (115, 116, 117) that is provided so as to be rotatable relative to the clutch hub only within a predetermined range in a circumferential direction and is provided with an inner peripheral tapered surface facing the outer peripheral tapered surface of the transmission gear; a shifting key (112) that is provided between the clutch hub and the sleeve so as to be relatively unrotatable but axially movable with respect to the clutch hub and is provided with a protrusion portion engagable with the recess portion of the sleeve; and a spring (113) that urges the shifting key toward the sleeve side, wherein as the sleeve moves, the shifting key is moved axially and pushes the synchronizer ring, whereby a frictional force is generated between the synchronizer ring and the transmission gear, and the frictional force causes the inner peripheral teeth of the sleeve to mesh synchronously with the meshing teeth of the transmission gear,
the synchronizer for a transmission being **characterized in that**
a reverse gear system having a reverse drive gear, a reverse driven gear, and a reverse idler gear provided therebetween is provided, in which the reverse drive gear, the reverse driven gear, and the reverse idler gear are meshed in a transmitting state by sliding axially a slide reverse gear, which is one of the reverse drive gear, the reverse driven gear and the reverse idler gear, and the outer periphery side of the sleeve is integrated with an on-sleeve reverse gear, which is one of the reverse drive gear, the reverse driven gear and the reverse idler gear other than the slide reverse gear,
between the protrusion portion of the shifting key in a neutral state and the recess portion of the sleeve, a gap is provided on a side opposite to a direction in which the slide reverse gear slides, and
at least a dimension obtained by subtracting an axial dimension of an initial gap between the shifting key in the neutral state and the synchronizer ring from an axial dimension of a maximum gap where the shifting key and the synchronizer ring do not contact with each other is secured as an axial dimension of the gap.

2. The synchronizer for a transmission according to claim 1, wherein the axial dimension of the gap between the protrusion portion of the shifting key in the neutral state and the recess portion of the sleeve is equal to the dimension that is obtained by subtracting the axial dimension of the initial gap between the shifting key in the neutral state and the synchronizer ring from the axial dimension of the maximum gap where the shifting key and the synchronizer ring do not contact with each other.

3. The synchronizer for a transmission according to claim 1 or 2, wherein flat sections of the shifting key and of the sleeve are brought into abutment against each other when the shifting key is in a neutral state.

4. The synchronizer for a transmission according to claim 3, wherein the flat section of the shifting key is a section on each side of the protrusion portion in an axial direction, and the flat section of the sleeve is a section on each side of the recess portion in the axial direction.

5. The synchronizer for a transmission according to claim 3, wherein the flat section of the shifting key forms a top surface of the protrusion portion, and the flat section of the sleeve forms an inner wall surface of the recess portion.

6. The synchronizer for a transmission according to any one of claims 1 to 5, wherein the axial dimension of the gap between the protrusion portion of the shifting key and the recess portion of the sleeve is set by changing an inclination start position of the protrusion portion or recess portion with respect to the protrusion portion or recess portion when the gap is not provided.

7. The synchronizer for a transmission according to any one of claims 1 to 6, wherein, of the on-sleeve gear, an end surface that is positioned in the direction of sliding the slide reverse gear is reduced in a direction opposite to the direction of sliding the slide reverse gear by a dimension equivalent to the axial dimension of the gap between the protrusion portion of the shifting key and the recess portion of the sleeve, as compared to a case where the gap is not provided.
